# EUROPÄISCHE PATENTSCHRIFT

(11) **EP 2 617 588 B1**
(45) Veröffentlichungstag und Bekanntmachung des Hinweises auf die Patenterteilung: **19.03.2014**
(21) Anmeldenummer: 12151418.6
(22) Anmeldetag: 17.01.2012
(51) Int. Cl.: B60H 1/34, B60H 1/24, B60R 13/02, B60N 2/56

(54) **Vorrichtung zur Klimatisierung und/oder Belüftung eines Innenraumes**
Device for air conditioning and/or venting an interior space
Dispositif de climatisation et/ou d'aération d'un espace intérieur

(43) Veröffentlichungstag der Anmeldung: 24.07.2013
(73) Patentinhaber: Magna Steyr Fahrzeugtechnik AG & Co KG, 8041 Graz (AT)
(72) Erfinder: Krammer, Christoph, 8530 Deutschlandsberg (AT)
(74) Vertreter: Rausch, Gabriele

(56) Entgegenhaltungen:
- DE-A1-102008 022 628
- DE-A1-102009 017 758
- DE-U1-202007 014 076

## Beschreibung

Die vorliegende Erfindung betrifft eine Vorrichtung zur Klimatisierung und/oder Belüftung eines Innenraumes, umfassend ein Innenverkleidungselement an welchem Ausströmöffnungen ausgebildet sind, wobei durch die Ausströmöffnungen Luft in den Innenraum einbringbar ist.

Derartige Vorrichtungen sind aus dem Stand der Technik bekannt und dienen unter anderem der Klimatisierung und/oder der Belüftung des Innenraumes eines Fahrzeuges. Ausströmöffnungen sind üblicherweise Luftdüsen oder Luftauslaßgitter über welche ein beispielsweise temperierter Luftstrom in den Fahrzeuginnenraum ausströmen kann, um dort durch Vermischung mit der vorhandenen Luft zur Temperierung oder zur Belüftung des Innenraumes beizutragen. Die Ausströmöffnungen sind dazu über Kanäle mit der Außenluft des Fahrzeuges verbunden und meist auch an ein Kühl-/Heizsystem des Fahrzeuges angeschlossen.

Eine Vorrichtung der gattungsgemäßen Art ist aus der DE 198 32 738 A l bekannt. Bei diesem System weist die Decke eines Fahrzeuges eine Luftverteilkammer auf, welche mit einer sich in Richtung der Flächenausdehnung der Decke flächig erstreckenden Luftaustrittswand an den Fahrgastraum angrenzt, wobei die Luftaustrittswand mit einer Vielzahl von feinverteilten Durchbrüchen versehen ist, durch welche die der Luftverteilkammer von der Luftversorgungseinrichtung zugeführte Luft in den Fahrgastraum eintritt.

Die DE 10 2009 017 758 zeigt eine Vorrichtung gemäß Oberbegriff des Anspruchs 1, die zudem einen Wabenkern aufweist.

Aus der DE 102 29 042 A1 ist eine Einrichtung zum Ausströmen von Luft in eine Fahrgastzelle eines Fahrzeugs mit einem großflächigen Luftaustrittsbauteil zur diffusen Luftverteilung bekannt, das zumindest einen sichtbaren Teil eines Verkleidungsteils bildet. Das Verkleidungsteil kann ein Fahrzeughimmel sein, der aus einer faserverstärkten Kunststoffplatte, einer Schaumschicht und einer Membran bestehen kann. Die Kunststoffplatte und die Schaumschicht sind mit vielen kleinen Löchern perforiert. Ein Hohlraum zur Führung der Luft befindet sich oberhalb des perforierten Dachhimmels, also oberhalb des Luftaustrittsbauteils, so dass Luft aus dem Hohlraum durch die vielen kleinen Löcher in der Kunststoffplatte und in der Schaumschicht in den Fahrzeuginnenraum strömen kann.

Es ist eine Aufgabe der Erfindung, eine Vorrichtung der genannten Art anzugeben, die eine kompakte Bauform aufweist und kostengünstig in der Herstellung ist.

Die Lösung der Aufgabe erfolgt durch eine Vorrichtung zur Klimatisierung und/oder Belüftung eines Innenraumes, umfassend ein Innenverkleidungselement an welchem Ausströmöffnungen ausgebildet sind, wobei durch die Ausströmöffnungen Luft in den Innenraum einbringbar ist, gemäß Anspruch 1.

Weiterbildungen der Erfindung sind in den abhängigen Ansprüchen, der Beschreibung sowie den beigefügten Zeichnungen angegeben.

Erfindungsgemäß sind die Kanäle zur Führung der Luft so ausgebildet, dass die Luft normal zum Sandwichaufbau des Innenverkleidungselementes geführt wird. Damit ist gemeint, dass durch die Kanäle im Faltkern eine Bewegung der Luft entlang des Innenverkleidungselementes ermöglicht wird. Der Luftstrom muss zumindest eine nicht unerhebliche Komponente normal zum Sandwichaufbau aufweisen. Eine Führung der Luft die in diesem Sinn normal zum Sandwichaufbau stattfindet, kann auch erreicht werden, wenn die Luft beispielsweise zick-zack-förmig oder wellenförmig entlang des Innenverkleidungselementes geführt wird.

Zusätzlich wird üblicherweise auch eine Bewegung der Luft in Richtung des Sandwichaufbaues stattfinden, zumindest an Positionen an denen die Luft zu den Ausströmöffnungen gelangt, an welchen sie aus dem Innenverkleidungselement austritt.

Durch die Führung normal zum Sandwichaufbau wird ein Transport der Luft entlang der Sandwichstruktur erreicht. Zusätzliche Bauteile zur Führung der Luft entlang des Innenverkleidungselementes sind nicht erforderlich.

In einer erfindungsgemäßen Vorrichtung sind die Kanäle zur Führung der Luft im Innenverkleidungselement vorzugsweise mit einem Luft-Kühl-/Heizsystem verbunden. Wenn das Innenverkleidungselement als Dachhimmel eines Kraftfahrzeuges ausgebildet ist, kann die Anbindung an ein Luft-Kühl-/Heizsystem beispielsweise im Bereich der A-, B- oder C-Säulen des Fahrzeuges stattfinden.

Dadurch kann die erfindungsgemäße Vorrichtung temperierte Luft zu den Ausströmöffnungen führen und so zum Temperieren der Luft im Innenraum verwendet werden.

Vorzugsweise sind die Kanäle zur Führung der Luft im Innenverkleidungselement mit einem Zugang zur Außenluft verbunden. Auf diese Weise ist eine Versorgung des Innenraumes mit Frischluft möglich. Ein Zugang zur Außenluft ist üblicherweise auch für die Funktion des vorzugsweise angeschlossenen Luft-Kühl-/Heizsystems erforderlich.

Gemäß einer Ausführungsform der Erfindung ist der Innenraum ein Innenraum eines Fahrzeuges.

Gemäß einer Ausführungsform der Erfindung ist das Innenverkleidungselement ein Fahrzeughimmel. Dieser stellt eine große Fläche bereit, die sich bestens für eine angenehme Belüftung und/oder Klimatisierung des Innenraumes eines Fahrzeuges eignet. Gemäß weiterer Ausführungsformen ist das Innenverkleidungselement ein Bodenverkleidungsteil oder ein Seitenverkleidungsteil eines Fahrzeuges.

Das Innenverkleidungselement kann auch beispielsweise in Flugzeugen, Schiffen oder Gebäuden zur Belüftung und/oder Klimatisierung von Innenräumen eingesetzt werden.

Erfindungsgemäß ist der Wabenkern als Faltkern ausgeführt. Faltkerne sind kostengünstig in der Herstellung und weisen gute Eigenschaften bezüglich ihrer Stabilität auf.

Erfindungsgemäß bilden die Hohlräume des Faltkerns durchgängige Kammern, die im Wesentlichen normal zum Sandwichaufbau des Innenverkleidungselementes verlaufen. Auf diese Weise werden von einem Faltkern große, zusammenhängende Hohlräume bereitgestellt, die von der erfindungsgemäßen Vorrichtung genutzt werden können.

Erfindungsgemäß sind die durchgängigen Kammern des Faltkerns als Kanäle zur Führung der Luft im Innenverkleidungselement ausgebildet. Durch entsprechende Zuführung der Luft an die durchgängigen Kammern eines Faltkernes können diese als Kanäle genutzt werden, durch welche die Luft über weitere Strecken entlang des Innenverkleidungselementes geführt werden kann. Dazu sind keine zusätzlichen Schritte in der Herstellung des Wabenkernes erforderlich.

In einem nicht erfindungsgemäßen Beispiel ist der Wabenkern als Expansionswellenkern oder als A-Wellen-Kern ausgeführt. Für das Beispiel geeignet sind auch klassische Ausbildungen von Wabenkernen, beispielsweise in Form der bekannten Bienenwaben. Diese Geometrien weisen bekannte Vorzüge insbesondere in Hinsicht auf deren Stabilität und kostengünstige Herstellung und Verarbeitung auf und können erfindungsgemäß verwendet werden. Dabei ist es vorteilhaft die Stege der Wabenkerne nachzubearbeiten.

Beispielsweise können die Stege des Wabenkerns Durchbrüche zur Verbindung von Hohlräumen des Wabenkerns aufweisen. Es können also beispielsweise Löcher oder Nuten in die Stege des Wabenkerns eingebracht werden, um so Kanäle zur Führung der Luft bereitzustellen, die in der Geometrie des Wabenkerns an sich nicht vorhanden sind.

Vorzugsweise sind die Ausströmöffnungen in der innenseitigen Decklage der Sandwichstruktur ausgebildet.

Dabei sind die Ausströmöffnungen vorzugsweise über die gesamte Fläche des Innenverkleidungselementes verteilt angeordnet. Die Ausströmöffnungen können gleichmäßig über das gesamte Innenverkleidungselement verteilt sein. Die Verteilung kann auch nach anderen Gesichtspunkten optimiert sein, um eine für Personen im Innenraum komfortable Belüftung bzw. Klimatisierung zu erreichen. Beispielsweise können die Ausströmöffnungen in einem Fahrzeughimmel vermehrt über einem Sitzbereich eines Fahrzeuges angeordnet sein, um eine gute Belüftung des Innenraumbereiches zu erzielen in dem sich die Personen üblicherweise aufhalten. Die Ausströmöffnungen können auch in einem Bereich eines Fahrzeuges konzentriert sein, in dem keine Sitze angeordnet sind, um unangenehme Zugluft für die Insassen zu vermeiden.

Die Ausströmöffnungen können dazu auch unterschiedliche Durchmesser aufweisen.

Gemäß einer weiteren Ausführungsform ist die Sandwichstruktur innenseitig mit einem luftdurchlässigen oder perforierten Material bedeckt. Auf diese Weise ist die Decklage der Sandwichstruktur für den FahrzeugInsassen nicht sichtbar. Ausströmöffnungen können durch das zusätzliche Material bedeckt sein, wobei durch die Luftdurchlässigkeit oder Perforation sichergestellt ist, dass die Funktion der Klimatisierung und/oder Belüftung des Innenraumes bewahrt bleibt.

Gemäß einer Ausführungsform der Erfindung ist das Innenverkleidungselement ein Teil eines Sitzes. Das Innenverkleidungselement kann beispielsweise eine tragende Struktur aus Kunststoff für einen Fahrzeugsitz bilden, die von luftdurchlässigem Schaumstoff und Stoff bedeckt ist. Die Luft tritt aus dem Innenverkleidungselement im Sitz aus und gelangt so direkt zum Passagier im Innenraum des Fahrzeuges.

Die Erfindung wird im Folgenden beispielhaft unter Bezugnahme auf die Zeichnungen beschrieben.
- Fig. 1: ist eine schematische Darstellung eines erfindungsgemäßen Innenverkleidungselementes in Aufsicht.
- Fig. 2: ist eine schematische Darstellung eines erfindungsgemäßen Innenverkleidungselementes in einer Seitenansicht, entsprechend einer Ansicht auf Fig.1 normal zur Richtung der Luftzufuhr A.
- Fig. 3: ist eine schematische Darstellung eines nicht erfindungsgemäßen Innenverkleidungselementes in Aufsicht.
- Fig. 4: ist eine schematische Darstellung eines Fahrzeuges mit einem erfindungsgemäßen Innenverkleidungselement.

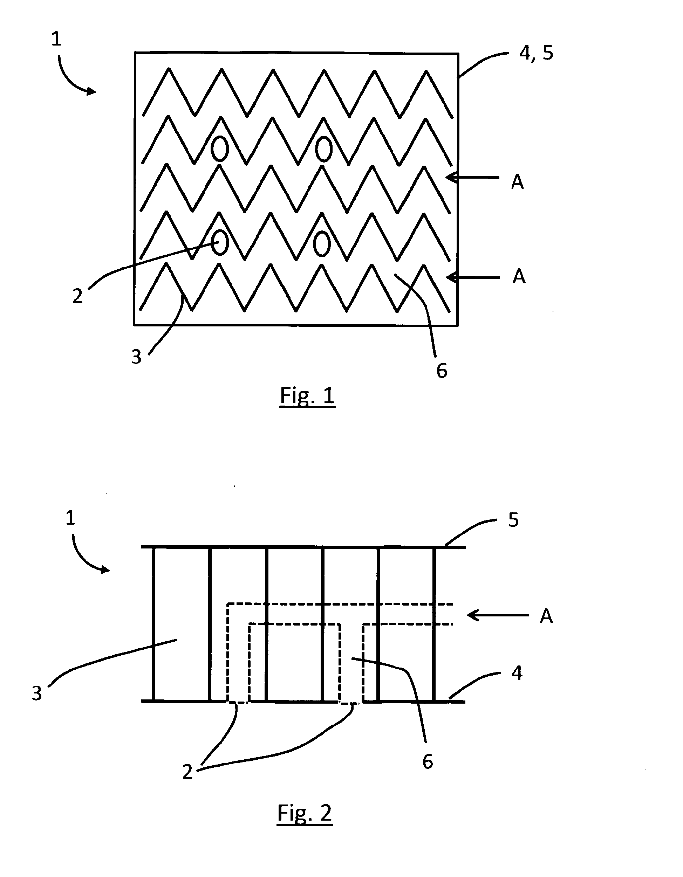

In Fig. 1 ist ein erfindungsgemäßes Innenverkleidungselement 1 dargestellt, welches einen Faltkern als Wabenkern verwendet. Die Stege 3 des Faltkerns verlaufen annähernd parallel zueinander in Zick-Zack-Form, so das sich die Stege zweier verschiedener Faltlagen auf weite Strecken nicht berühren. Dadurch werden von den Hohlräumen 6 weitläufige Kammern ausgebildet. Ein in Richtung A seitlich eingebrachter Luftstrom kann daher entlang der dargestellten Kammern weitgehend ungehindert durch das Innenverkleidungselement 1 strömen. Der Wabenkern wird von zwei Decklagen, einer innenseitigen Decklage 4 und einer außenseitigen Decklage 5 begrenzt, die in der Ansicht der Fig. 1 zusammenfallen. An der innenseitigen Decklage 4 sind an einigen Stellen Ausströmöffnungen 2 angebracht, durch welche die Luft normal zur Richtung der Luftzufuhr A und normal zum Schichtaufbau der Sandwichstruktur aus dem Innenverkleidungselement 1 austreten und in einen Innenraum gelangen kann.

Sowohl der Wabenkern bzw. dessen Stege 3, als auch die Decklagen 4,5 können aus unterschiedlichen Materialien gefertigt sein, beispielsweise aus Papier, Pappe, Kunststoff, faserverstärktem Kunststoff oder Metallen. Die faserverstärkten Werkstoffe können aus Fasermaterial beispielsweise in Form von Langfasern, Vliesen, Gelegen oder Geweben bestehen und als Matrix beispielsweise Harz, Polyurethane und ähnliches verwenden.

Fig. 2 zeigt schematisch ein Innenverkleidungselement 1 in einer Seitenansicht, so dass der Sandwichaufbau aus innenseitiger Decklage 4, Stegen 3 eines Wabenkerns, und außenseitiger Decklage 5 gut zu erkennen ist. Die Luft strömt in Richtung A in die Sandwichstruktur ein und bewegt sich annähernd wie durch die gestrichelten Linien dargestellt, entlang des Innenverkleidungselementes 1 und hin zu den Ausströmöffnungen 2. Wenn der Wabenkern wie der Faltkern der Fig.1 mit durchgängigen Kammern ausgestaltet ist, ist es nicht erforderlich zusätzliche Durchbrüche an den Stegen 3 anzubringen. Es kann allerdings zweckmäßig sein auch bei einem Faltkern Durchbrüche, zum Beispiel normal zum Verlauf der bestehenden durchgängigen Kammern auszubilden, um den Luftaustausch zwischen den einzelnen Faltlagen zu ermöglichen oder zu erhöhen.

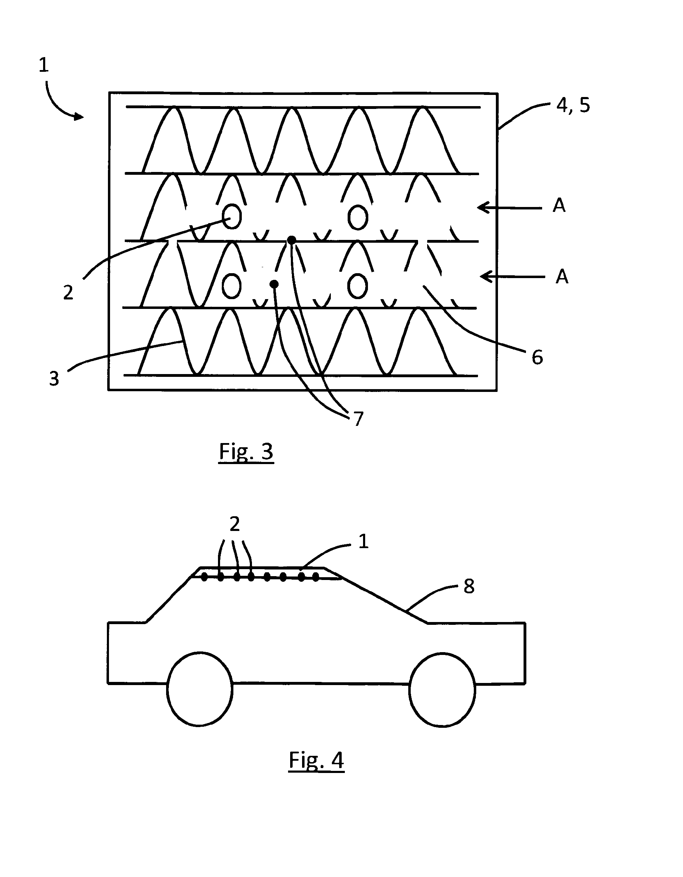

Wie aus Fig. 3 ersichtlich kann auch ein klassischer Wabenkern mit A-Wellen-Form für ein Innenverkleidungselement 1 verwendet werden. Die Stege 3 unterschiedlicher Wellenebenen sind dabei miteinander verbunden, so dass die Hohlräume 6 keine ausgeprägte Bewegung der Luft entlang des Innenverkleidungselementes 1 ermöglichen würden. Daher sind Durchbrüche 7 an einigen Stegen ausgebildet, zum Beispiel als Löcher mittig im Wabenkern der Sandwichstruktur, oder auch in der Nähe der innenseitigen oder der außenseitigen Decklage 4,5 der Sandwichstruktur. Die Durchbrüche können sowohl die Hohlräume einzelner Wellen einer Wellenebene miteinander verbinden, als auch die Hohlräume unterschiedlicher Wellenebenen miteinander verbinden.

In Fig. 4 ist der Einsatz eines erfindungsgemäßen Innenverkleidungselementes 1 in einem Fahrzeug 8 dargestellt. Das Innenverkleidungselement 1 bildet dabei einen Dachhimmel des Fahrzeuges 8. Die Ausströmöffnungen 2 ermöglichen die Zuleitung von temperierter Luft durch den Dachhimmel in den Innenraum des Fahrzeuges 8.

Ein erfindungsgemäßer Dachhimmel kann auch in nicht-planarer Form einfach hergestellt werden, zum Beispiel mit Hilfe des bekannten "Crushed-Core" Verfahrens. Hierbei wird ein planarer Wabenkern durch Druckeinwirkung lokal verformt und durch die Decklagen des Sandwichbauteiles in Form gehalten.

Die Erfindung ermöglicht somit eine besonders kompakte Bauform sowie relativ geringe Herstellungskosten für eine Vorrichtung zur Klimatisierung und/oder Belüftung eines Innenraumes eines Fahrzeuges.

### Bezugszeichenliste

- 1: Innenverkleidungselement
- 2: Ausströmöffnungen
- 3: Stege
- 4: innenseitige Decklage
- 5: außenseitige Decklage
- 6: Hohlräume
- 7: Durchbrüche
- 8: Fahrzeug

- A: Richtung der Luftzufuhr

## Patentansprüche

1. Vorrichtung zur Klimatisierung und/oder Belüftung eines Innenraumes, umfassend ein Innenverkleidungselement (1) an welchem Ausströmöffnungen (2) ausgebildet sind, wobei durch die Ausströmöffnungen (2) Luft in den Innenraum einbringbar ist,
**dadurch gekennzeichnet, dass** das Innenverkleidungselement (1) als Sandwichstruktur mit einem aus mehreren zueinander parallel verlaufenden Stegen (3) gebildeten Faltkern und mit zumindest einer innenseitigen Decklage (4) aufgebaut ist und dass Hohlräume (6) zwischen den Stegen (3) des Faltkerns durchgängige Kammern bilden, die im Wesentlichen normal zum Sandwichaufbau des Innenverkleidungselementes (1) verlaufen und als Kanäle zur Führung der Luft im Innenverkleidungselement (1) ausgebildet sind, wobei die Stege (3) des Faltkerns die Begrenzungen der Kanäle bilden.

2. Vorrichtung nach Anspruch 1,
**dadurch gekennzeichnet, dass** die Kanäle zur Führung der Luft im Innenverkleidungselement (1) mit einem Luft-Kühl-/Heizsystem verbindbar sind.

3. Vorrichtung nach Anspruch 1,
**dadurch gekennzeichnet, dass** die Kanäle zur Führung der Luft im Innenverkleidungselement (1) mit einem Zugang zur Außenluft verbindbar sind.

4. Vorrichtung nach Anspruch 1,
**dadurch gekennzeichnet, dass** das Innenverkleidungselement (1) ein Fahrzeughimmel ist.

5. Vorrichtung nach Anspruch 1,
**dadurch gekennzeichnet, dass** die Stege (3) des Faltkerns Durchbrüche (7) zur Verbindung von Hohlräumen (6) des Faltkerns aufweisen.

6. Vorrichtung nach Anspruch 1,
**dadurch gekennzeichnet, dass** die Ausströmöffnungen (2) in der innenseitigen Decklage (4) der Sandwichstruktur ausgebildet sind.

7. Vorrichtung nach Anspruch 1,
**dadurch gekennzeichnet, dass** die Ausströmöffnungen (2) über die gesamte Fläche des Innenverkleidungselementes (1) verteilt angeordnet sind.

8. Vorrichtung nach Anspruch 1,
**dadurch gekennzeichnet, dass** die Ausströmöffnungen (2) unterschiedliche Durchmesser aufweisen.

9. Vorrichtung nach Anspruch 1,
**dadurch gekennzeichnet, dass** die Sandwichstruktur innenseitig mit einem luftdurchlässigen oder perforierten Material bedeckt ist.

10. Vorrichtung nach Anspruch 1,
**dadurch gekennzeichnet, dass** das Innenverkleidungselement (1) ein Teil eines Sitzes ist.

## Claims

1. Apparatus for the air conditioning and/or ventilation of an interior, comprising an interior trim element (1) on which are configured outflow openings (2) through which air can be introduced into the interior,
**characterized in that** the interior trim element (1) is constructed as a sandwich structure having a folding core formed of a plurality of webs (3) running parallel to one another and having at least one inside top layer (4), and **in that** cavities (6) between the webs (3) of the folding core form continuous chambers, which run substantially normal to the sandwich structure of the interior trim element (1) and are configured as ducts for guiding the air in the interior trim element (1), the webs (3) of the folding core forming the boundaries of the ducts.

2. Apparatus according to Claim 1,
**characterized in that** the ducts for guiding the air in the interior trim element (1) can be connected to an air cooling/heating system.

3. Apparatus according to Claim 1,
**characterized in that** the ducts for guiding the air in the interior trim element (1) can be connected to an access path to the external air.

4. Apparatus according to Claim 1,
**characterized in that** the interior trim element (1) is a vehicle roofliner.

5. Apparatus according to Claim 1,
**characterized in that** the webs (3) of the folding core can have apertures (7) for the connection of cavities (6) of the folding core.

6. Apparatus according to Claim 1,
**characterized in that** the outflow openings (2) are configured in the inside top layer (4) of the sandwich structure.

7. Apparatus according to Claim 1,
**characterized in that** the outflow openings (2) are arranged distributed over the entire surface of the interior trim element (1).

8. Apparatus according to Claim 1,
**characterized in that** the outflow openings (2) have different diameters.

9. Apparatus according to Claim 1,
**characterized in that** the sandwich structure is covered on the inside with an air-permeable or perforated material.

10. Apparatus according to Claim 1,
**characterized in that** the interior trim element (1) is a part of a seat.

## Revendications

1. Dispositif de climatisation et/ou d'aération d'un espace intérieur, comprenant un élément d'habillage intérieur (1) dans lequel des orifices de sortie (2) sont réalisés, dans lequel de l'air peut être introduit dans l'espace intérieur par les orifices de sortie (2), **caractérisé en ce que** l'élément d'habillage intérieur (1) est construit comme une structure sandwich avec un noyau plié formé par plusieurs ailettes (3) s'étendant parallèlement les unes aux autres et avec au moins une couche de recouvrement (4) du côté intérieur, et **en ce que** des cavités (6) entre les ailettes (3) du noyau plié forment des chambres continues, qui s'étendent essentiellement normalement à la structure sandwich de l'élément d'habillage intérieur (1) et qui sont réalisées sous la forme de canaux pour le guidage de l'air dans l'élément d'habillage intérieur (1), dans lequel les ailettes (3) du noyau plié forment les parois de délimitation des canaux.

2. Dispositif selon la revendication 1, **caractérisé en ce que** les canaux pour le guidage de l'air dans l'élément d'habillage intérieur (1) peuvent être raccordés à un système de refroidissement/chauffage de l'air.

3. Dispositif selon la revendication 1, **caractérisé en ce que** les canaux pour le guidage de l'air dans l'élément d'habillage intérieur (1) peuvent être raccordés à un accès vers l'air extérieur.

4. Dispositif selon la revendication 1, **caractérisé en ce que** l'élément d'habillage intérieur (1) est un ciel de véhicule.

5. Dispositif selon la revendication 1, **caractérisé en ce que** les ailettes (3) du noyau plié présentent des passages (7) pour relier des cavités (6) du noyau plié.

6. Dispositif selon la revendication 1, **caractérisé en ce que** les orifices de sortie (2) sont réalisés dans la couche de recouvrement du côté intérieur (4) de la structure sandwich.

7. Dispositif selon la revendication 1, **caractérisé en ce que** les orifices de sortie (2) sont disposés de façon répartie sur toute la surface de l'élément d'habillage intérieur (1).

8. Dispositif selon la revendication 1, **caractérisé en ce que** les orifices de sortie (2) présentent des diamètres différents.

9. Dispositif selon la revendication 1, **caractérisé en ce que** la structure sandwich est recouverte du côté intérieur avec un matériau perméable à l'air ou perforé.

10. Dispositif selon la revendication 1, **caractérisé en ce que** l'élément d'habillage intérieur (1) fait partie d'un siège.
